# EUROPEAN PATENT SPECIFICATION

(11) **EP 3 268 642 B1**
(45) Date of publication and mention of the grant of the patent: **06.05.2020**
(21) Application number: 16713993.0
(22) Date of filing: 04.03.2016
(51) Int. Cl.: B29C 43/36, B29C 31/04, B29C 48/30, B29C 48/00, B29C 48/32, B29C 33/00

(54) **SEAL SYSTEM FOR MELTED PLASTICS**
DICHTUNGSSYSTEM FÜR GESCHMOLZENE KUNSTSTOFFMATERIALIEN
SYSTÈME D'ÉTANCHÉITÉ POUR MATERIAUX PLASTIQUES À L'ÉTAT FONDU

(30) Priority: 13.03.2015 IT UB20150485
(43) Date of publication of application: 17.01.2018
(73) Proprietor: Sacmi Cooperativa Meccanici Imola Societa' Cooperativa, 40026 Imola (BO) (IT)
(72) Inventor: SALLIONI, Andrea, 40062 Molinella (Bologna) (IT)
(74) Representative: Villanova, Massimo
(86) International application number: PCT/IB2016/051217
(87) International publication number: WO 2016/147075

(56) References cited:
- WO-A1-00/30825
- WO-A1-2004/080684
- WO-A1-2011/023399
- US-A1- 2005 147 709
- US-A1- 2007 286 919
- DATABASE WPI Week 201261 Thomson Scientific, London, GB; AN 2012-L57518 XP002752124, -& JP 2012 172694 A (TOYO SEIKAN KAISHA LTD) 10 September 2012 (2012-09-10)
- DATABASE WPI Week 200880 Thomson Scientific, London, GB; AN 2008-N76405 XP002752125, -& JP 2008 286357 A (SUMITOMO HEAVY IND LTD) 27 November 2008 (2008-11-27)

## Description

### Background of the invention

The invention relates to a seal system for plastics in melted or pasty state, in particular for preventing the leak di plastics through the interstice comprised between two cylindrical surfaces coupled in reciprocal linear sliding, for example to prevent the undesired leak of plastics from apparatuses that process the material in melted or pasty state.

Specifically, but not exclusively, the invention can be applied in a mould for forming and compressing doses of plastics and/or in an extruder arranged for dispensing annular doses of plastics (intended for compression-moulding) and/or in a piston pump for supplying plastics.

The prior art comprises various types of apparatus for processing melted or pasty plastics in which linear sliding occurs between cylindrical elements. To avoid leaks of plastics through the interstice comprised between the coupled cylindrical surfaces, it is known to construct such cylindrical surfaces in an extremely precise manner, i.e. with much reduced dimensional and geometric tolerances, with consequent constructional complications. Further, also in the presence of very reduced constructional tolerances, the seal effect can be insufficient and it is anyway desirable to improve the efficacy thereof, in particular in conditions of critical operation, for example because of the high pressure and temperature of the plastics. US-A-2007 286 919 discloses a seal system as in the preamble of claim 1. WO-A-2004 080 684 discloses annular seals in a molding apparatus. WO-A-2011 023 399 discloses an extrusion nozzle for applying a sealing compound to a surface. JP-A-2012 172 694 discloses a seal device for fixing a seal member.

### Summary of the invention

One object of the invention is to make a seal system for plastics that is able to overcome one or more of the aforesaid drawbacks of the prior art.

One advantage is to provide a system for sealing (cylindrical) elements that are linearly slidable in relation to one another.

One advantage is to prevent a leak of (melted or pasty) plastics through the interstice comprised between two coupled (cylindrical) surfaces.

One advantage is to ensure an effective seal against leaks of plastics even with relatively wide dimensional and geometrical tolerances.

One advantage is to obtain a reliable seal even in critical operating conditions, for example because of high pressure and temperatures.

One advantage is to make available a constructionally simple and cheap system for sealing (melted or pasty) plastics.

Such objects and advantages and still others are achieved by a seal system and/or by an apparatus according to one or more of the claims set out below.

According to the invention, a seal system comprises at least two bodies, a male and a female body, which are slidable with respect to one another, between which an interstice is comprised through which the plastics (in melted or pasty state) can leak that are contained in at least one chamber that is at least partially defined by at least one of the aforesaid bodies, a seal ring being arranged in said interstice to prevent the leak of the plastics. The aforesaid seal ring is an open elastic ring. In particular the seal ring can have two side surfaces that are flat and parallel to one another, like an elastic strip or seal segment.

### Brief description of the drawings

The invention can be better understood and implemented with reference to the attached drawings, which illustrate some embodiments thereof by way of non-limiting example.

Figure 1 is a section of a mould that is suitable for compression-moulding doses of plastics and is provided with a first embodiment of a seal system made according to the invention, in a first configuration in which the mould has an upper punch and a lower die that are open to be able to receive a dose of plastics to be moulded.

Figure 2 is the section of figure 1 in a second configuration in which the punch and die are about to close to carry out compression moulding of the dose of plastics.

Figure 3 is the section of figure 1 in a third configuration in which the punch and die are closed to define a forming cavity of a workpiece.

Figure 4 is the section of figure 1 in a fourth configuration in which the punch and die are open to enable the moulded workpiece to be extracted.

Figure 5 is the section of figure 1 in a fifth configuration in the step of extracting the moulded workpiece.

Figure 6 is an outlet section of an extruder that is suitable for dispensing annular doses of plastics intended for compression-moulding and which is provided with a second embodiment of a seal system made according to the invention, in a first configuration in which an annular portion of plastics can exit the extruder before being separated by a shearing element.

Figure 7 is the section of figure 6 in a second configuration in which the shearing element has separated an annular dose from the rest of the plastics.

Figure 8 is an outlet section of an extruder that is provided with a third embodiment of a seal system made according to the invention, in a material exit configuration similar to that of figure 6.

Figure 9 is the section of figure 8 in an annular dose shearing configuration similar to that of figure 7.

Figure 10 is an outlet section of an extruder that is provided with a fourth embodiment of a seal system made according to the invention, in a material exit configuration similar to that of figure 6.

Figure 11 is the section of figure 10 in an annular dose shearing configuration similar to that of figure 7.

Figure 12 is an outlet section of an extruder that is provided with a fifth embodiment of a seal system made according to the invention, in a material exit configuration similar to that of figure 6.

Figure 13 is the section of figure 12 in an annular dose shearing configuration similar to that of figure 7.

Figure 14 is a section of a piston pump that is suitable for supplying plastics in melted or pasty state and is provided with a sixth embodiment of a seal system made according to the invention.

Figure 15 shows the section of eight different embodiments of seal rings that are usable in a seal system made according to the invention.

Figures 16 to 18 show three embodiments of couplings or cuts of open rings that are usable in a seal system made according to the invention.

### Detailed description

In this description, alike elements that are common to the various illustrated embodiments have been indicated by the same numbering.

A seal system according to the invention comprises at least one male body 1 having an outer surface. The seal system comprises at least one female body 2 having an inner surface coupled with the outer surface of the male body 1.

The inner surface and the outer surface are slidable in relation to one another, in particular slidable in an axial direction. Sliding between the surfaces comprises at least one sliding component in axial direction. Sliding between the surfaces can comprise, in particular, at least one sliding component for sliding in a circumferal direction, i.e. a component that rotates (even minimally). The inner and outer surfaces are conjugate surfaces of a pair, in particular with translating motion (for example a sliding pair or a cylindrical pair). It further comprises an interstice (or thin interstice) between the aforesaid inner and outer surfaces. The inner surface and the outer surface are cylindrical surfaces that are coaxial to one another. The interstice are thus of cylindrical shape.

The seal system comprises at least one chamber 3 arranged for containing plastics in melted or pasty state. The chamber 3 is at least partially defined by the male body 1 and/or by the female body 2. The chamber 3 communicates with the interstice in at least one operating configuration of the two bodies 1 and 2 that are coupled with one another.

The seal system comprises at least one seal ring 4 that is arranged in the interstice. The seal ring 4 is used to prevent a leak of plastics through the interstice. The seal ring 4 is used, in particular, to prevent a leak of plastics in melted or pasty state originating in the chamber 3.

The seal ring 4 comprises an open elastic ring having, for example an opening or cut, similarly to an elastic strip of known type. The seal ring 4 can comprise, as in these embodiments, two side surfaces that are flat and parallel to one another, similarly to an elastic strip of known type.

The seal ring 4 can be housed in a seat obtained in the male body 1 or in a seat obtained on the female body 2.

The seal ring 4 can be made of steel, in particular of a stainless and/or hardened steel. The seal ring 4 can have at least one surface treatment to improve the slidability thereof and thus reduce the friction thereof and/or improve the resistance thereof. The seal ring 4 can be made of plastics, in particular plastics having pressure and temperature that are greater than that of the melted plastics contained in the chamber. The seal ring 4 can be made, for example, of PTFE. The seal ring 4 can be made, for example, of plastics (PTFE) reinforced with reinforcing particles (for example fibres and/or balls and/or hollow balls), for example particles of glass and/or graphite. The seal ring 4 can be made, for example, of graphite or of a graphite-based material.

The seal system can be suitable for various temperature and pressure conditions. In particular, the seal system can be able to ensure the seal against leaks of the melted or pasty plastics even if the coupling surfaces are made of materials with different thermal expansion (to prevent seizing up or excessive clearance), for example if the male body 1 and the female body 2 are made the one of steel and the other of bronze or the one of steel and the other of cast iron, etc.

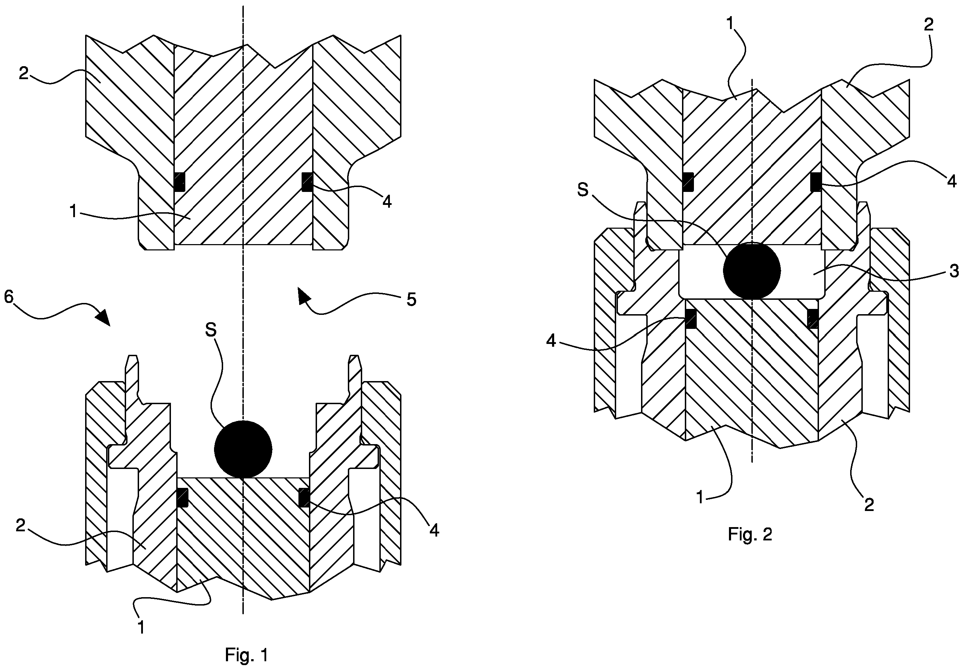

With reference to figures 1 to 5, a first embodiment is illustrated in which the seal system is applied to a mould for compression moulding of doses S of plastics. In this specific embodiment two male bodies 1 and two female bodies 2 are arranged, each of which is coupled with a respective male body 1. A first pair of male and female bodies 1 and 2 belongs, in particular, to an (upper) first half mould 5 of the mould. A second pair of male and female bodies 1 and 2 belongs, in particular, to a (lower) second half mould 6 of the mould. The first half mould 5 can comprise, for example, a punch. The second half mould 6 can comprise, for example, a die. One male body 1 and one female body 2 are, in this case, two portions of the first half mould 5. One male body 1 and one female body 2 are, in this case, two portions of the second half mould 6. The chamber 3 is, in this case, a moulding cavity of the mould.

As is seen, in this specific embodiment, the seal system comprises a second male body 1, having a second outer surface, and a second female body 2, having a second inner surface coupled with the second outer surface. The second inner and outer surfaces can be slidable in relation to one another (in an axial direction). A second interstice can be comprised between the second inner and outer surfaces. The chamber 3 containing the melted plastics can be at least partially bounded by the second male body 1 and/or by the second female body 2. The chamber 3 can communicate with the second interstice in at least one operating configuration of the second male and female bodies 1 and 2. In this specific embodiment a second seal ring 4 can be arranged in the second interstice to prevent a leak of the (melted or pasty) plastics and the exit of plastics through the second interstice. The second male body 1 and the second female body 2 can be, in particular, two portions of the second half mould 6. The chamber 3 (moulding cavity) can be defined between the two half moulds 5 and 6.

In this specific embodiment the seal rings 4 are outer rings housed at corresponding seats obtained on the two male bodies 1.

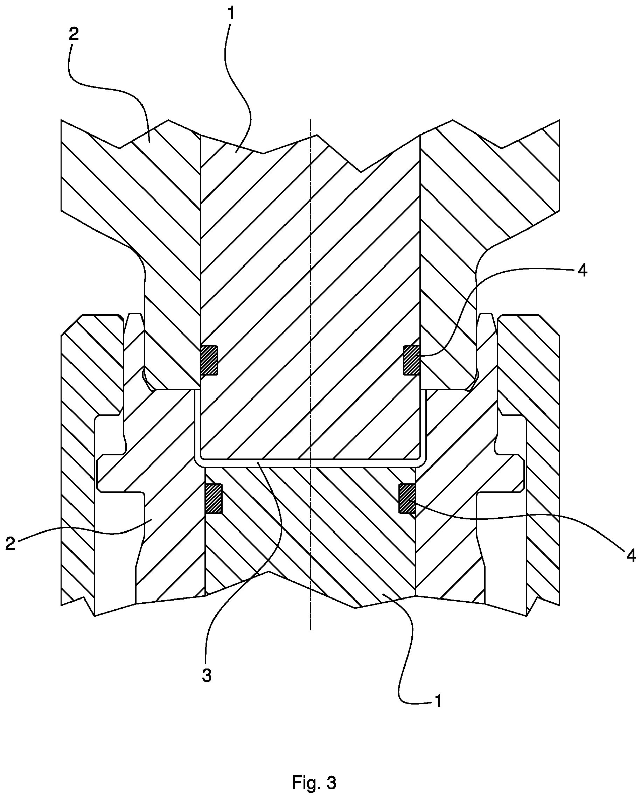

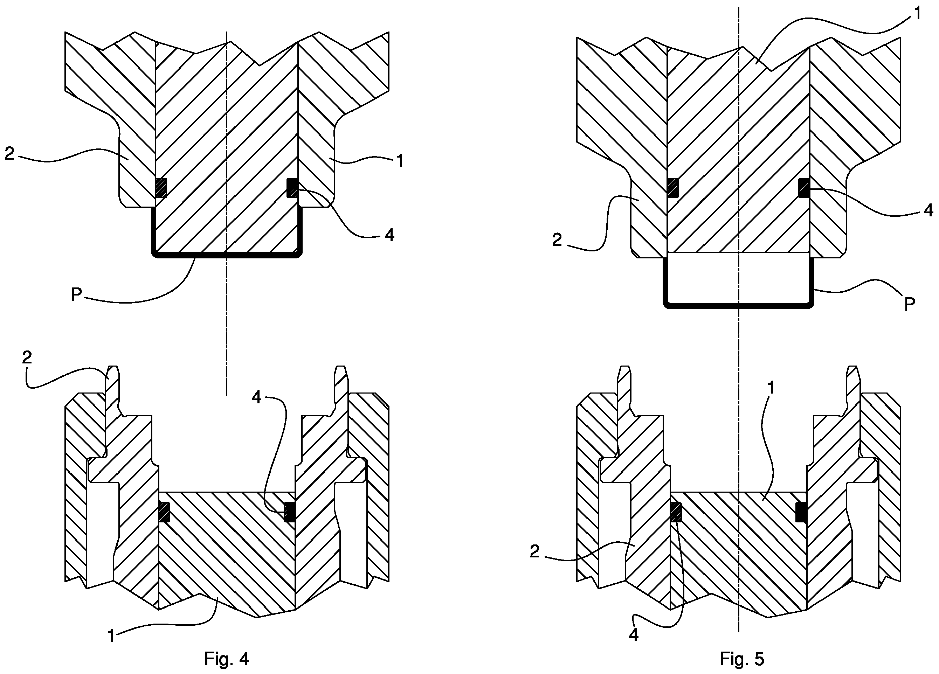

In figure 1, the half moulds 5 and 6 are open to enable a dose S of plastics to be introduced. In figure 2 the half moulds 5 and 6 have already started the closing movement that is completed in figure 3. In figure 4 the half moulds 5 and 6 are open to enable the moulded workpiece P to be subsequently extracted, as shown in figure 5. During operation of the mould, the first male body 1 and the first female body 2 perform a corresponding (axial sliding) movement, like the second male body 1 and the second female body 2. The two seal rings 4 stop the possible leak of plastics from the chamber 3 through the respective interstices.

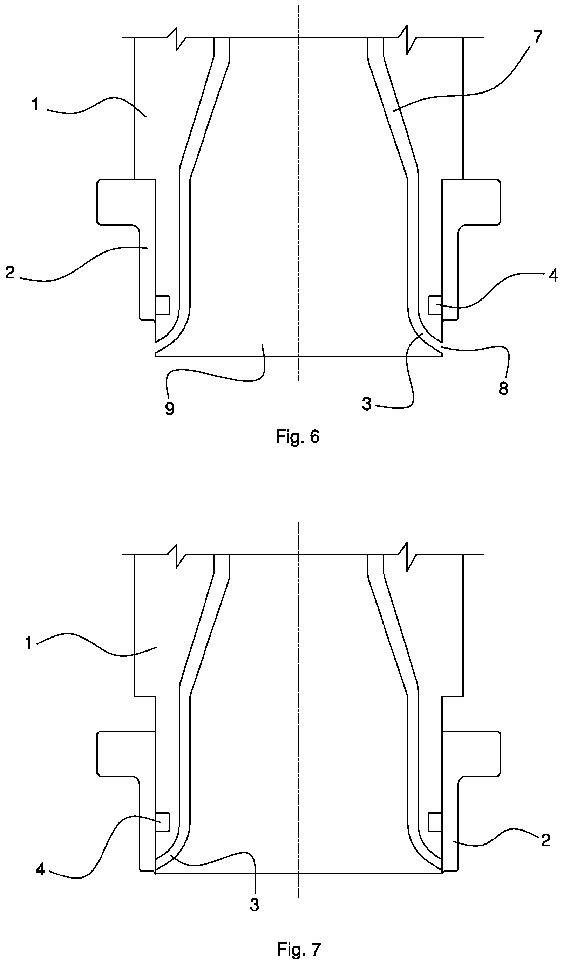

With reference to the embodiments of figures 6 to 13, the chamber 3 containing the plasticised material can comprise at least one (final) portion of an annular conduit 7 for supplying plastics of an extruder, arranged in particular in an outlet zone of the extruder. The extruder can be suitable for dispensing annular doses of plastics intended for compression-moulding. The chamber 3 can have, as in these embodiments, at least one annular outlet 8 of the plastics. The male body 1 can comprise, in particular, an outer wall that delimits the annular conduit 7 in collaboration with a core 9. The female body 2 can comprise, in particular, at least one shearing element that is movable axially with respect to the male body 1. In particular the female body 2 can be movable with a reciprocal motion between at least one (lower, figures 7, 9, 11 and 13) first position in which the shearing element closes the annular outlet 8 after separating an annular dose of plastics that has previously exited the annular outlet 8, and at least one (upper, figures 6, 8, 10 and 12) second position in which the shearing element leaves open the annular outlet 8 to enable a step of exiting of the plastics.

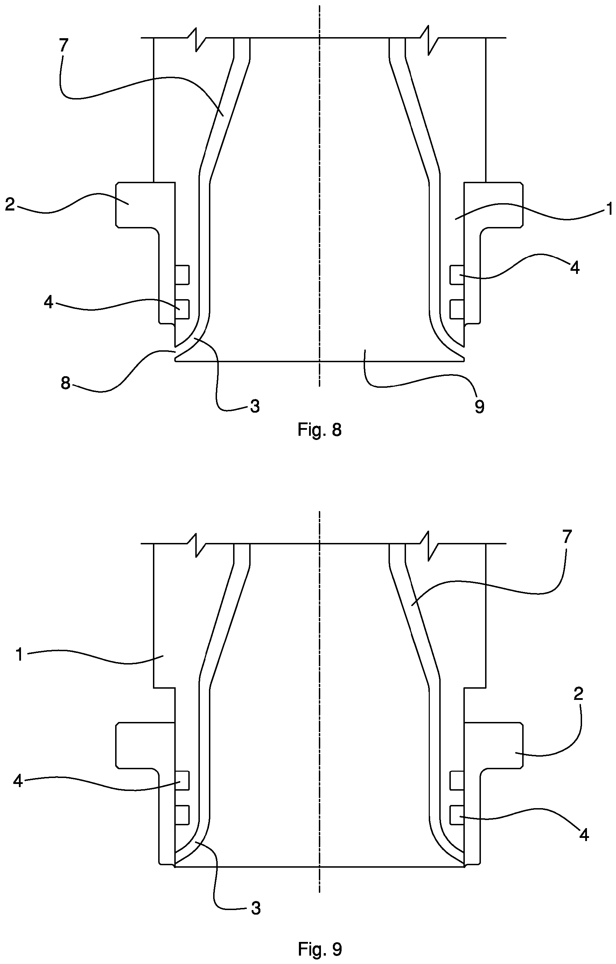

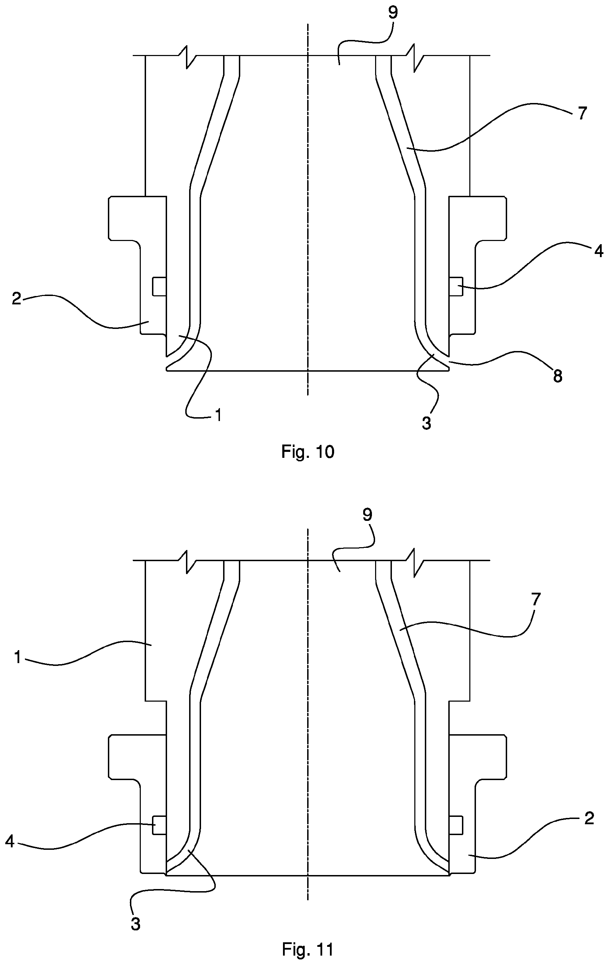

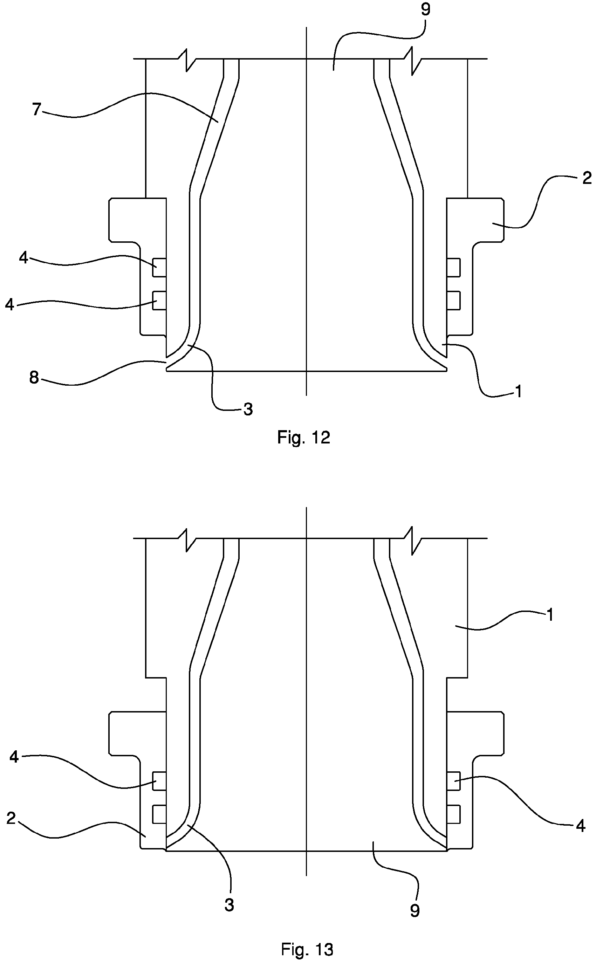

It is possible to arrange just one outer seal ring 4 fitted to the male body 1 (figures 6 and 7), or two outer seal rings 4 both fitted to the male body 1 (figures 8 and 9), or only one inner seal ring 4 fitted to the female body 2 (figures 10 and 11), or two inner seal rings 4 both fitted to the female body 2 (figures 12 and 13). It is nevertheless possible to provide other arrangements (also with a different number of seal rings).

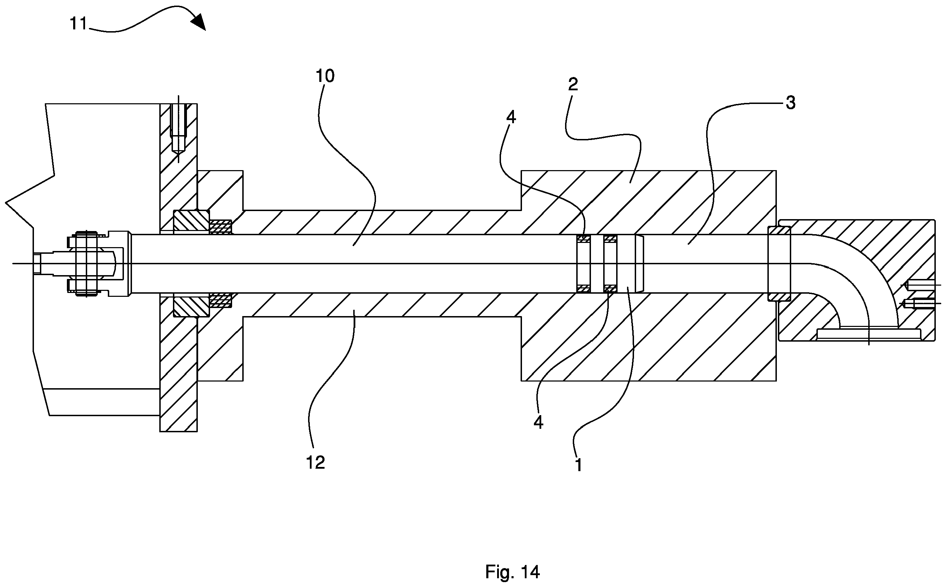

With reference to figure 14, the male body 1 comprises at least one portion of a piston 10 of a piston pump 11 for plastics and the female body 2 comprises at least one portion of a cylinder 12 of the piston pump 11. The piston pump 11 can be used, in particular, for supplying plastics in melted or pasty state to a user, such as for example a moulding apparatus or something else. The driving means of the piston pump 11 can be of known type and has therefore not been illustrated in greater detail. The seal system comprises, in this specific case, two outer seal rings 4 fitted to the male body 1 (piston 10).

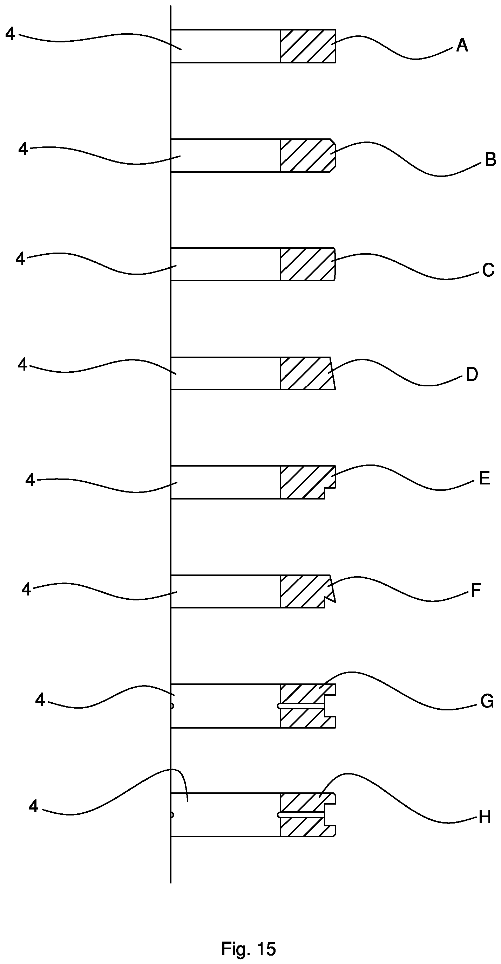

In figure 15 some possible embodiments are illustrated of a section of the seal ring 4. In particular, with A a section of rectangular shape has been indicated, with B a rectangular section with outer bevels has been indicated, with C a section with a slightly convex surface has been indicated, with D a section with a tilted contact surface has been indicated, with E a section with an outer step has been indicated, with F a section with a tilted contact surface and outer step has been indicated, with G a section of a grooved ring with holes has been indicated, with H a section of a grooved ring with outer bevels and holes has been indicated. It is possible to have seal rings with sections other than those illustrated, for example with a section with a square, trapezoid, semi-trapezoid shape, with inner bevel, with inner step, an "L" shape, etc.

Each of the seal rings illustrated here comprises an elastic ring of open shape (with coupling, opening or cut where the ends of the ring can join) and of flat shape (with opposite flat and parallel side surfaces), in the form of an elastic strip. It is nevertheless possible to use seal rings of different type.

It is possible, for example, to use expanding seal rings, in which the seat (groove) of the ring is in the male body and the seal surface is the outer surface in contact with the female body, or contracting seal rings in which the seat (groove) of the ring is in the female body and the seal surface is the inner surface in contact with the male body.

In the embodiments illustrated here each seal ring 4 comprises a ring made as a single piece. It is nevertheless possible to use a seal ring made of several parts, for example a ring formed of a combination of two or three rings, for example with an inner ring and an outer ring (and possible intermediate ring).

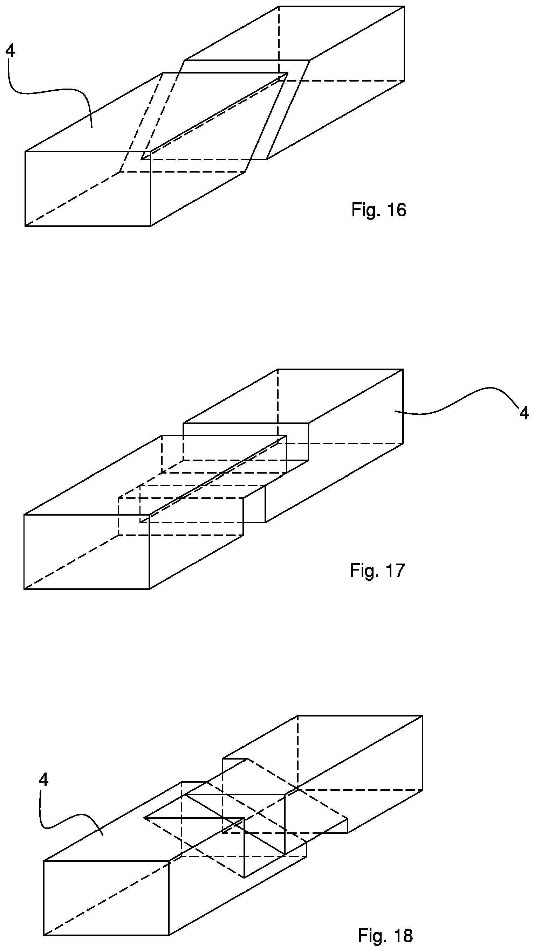

In Figures 16 to 18 three embodiments are shown of possible junctions, openings or cuts of the seal ring 4. In particular, an oblique coupling (figure 16), a bayonet coupling (figure 17) and a tilted bayonet coupling (figure 18) are shown. Nevertheless, other types of coupling, opening or cut are possible, for example cuts adopted for elastic strips or elastic seal segments. It is further possible to use pin rings or other types of ring that are used as elastic segments.

## Claims

1. Seal system comprising:
- at least one male body (1) having an outer surface;
- at least one female body (2) having an inner surface coupled with said outer surface, said inner surface and said outer surface being cylindrical surfaces that are coaxial with one another, said inner and outer surfaces being slidable in relation to one another at least partially in an axial direction, an interstice being comprised between said inner and outer surfaces;
- at least one chamber (3) arranged for containing plastics, said chamber (3) being at least partially defined by said male body (1) and/or by said female body (2), said chamber (3) communicating with said interstice in at least one operating configuration of said bodies (1; 2);
**characterised in that** through said interstice plastics can leak that are contained in said chamber, **in that** said seal system comprises at least one seal ring (4) arranged in said interstice to prevent leaking of said plastics, and **in that** said seal ring (4) is an open elastic ring.

2. System according to claim 1, wherein said open elastic ring has two side surfaces that are flat and parallel to one another.

3. System according to claim 1 or 2, wherein said seal ring (4) is housed in a seat that is obtained on said male body (1) or on said female body (2).

4. System according to any preceding claim, wherein said seal ring (4) is made of steel, in particular of stainless and/or hardened steel, and/or of plastics having a resistance to pressure and temperature that is greater than the plastics contained in said chamber (3).

5. System according to any preceding claim, wherein said chamber (3) comprises an extrusion conduit (7), said chamber (3) having an extrusion outlet (8), said female body (2) comprising a shearing element, said female body (2) being movable with reciprocal movement between at least one first position wherein said shearing element closes said outlet (8) having separated a dose of said plastics flowed out from said outlet, and a second position wherein said shearing element leaves said outlet (8) open to enable said plastics to flow out.

6. System according to any preceding claim, wherein said male body (1) and said female body (2) are two portions of a first half mould (5) of a compression mould for compressing plastics and wherein said chamber (3) comprises a forming cavity of said mould.

7. System according to any preceding claim, comprising:
- at least one second male body (1) having a second outer surface;
- at least one second female body (2) having a second inner surface coupled with said second outer surface, said second inner and outer surfaces being slidable in relation to one another at least partially in an axial direction, a second interstice being comprised between said second inner and outer surfaces, said chamber (3) being at least partially bounded by said second male body (1) and/or by said second female body (2), said chamber (3) communicating with said second interstice in at least one operating configuration of said second male and female bodies (1; 2);
- at least one second seal ring (4) arranged in said second interstice to prevent a leak of said plastics.

8. System according to claims 7 and 6, wherein said second male body (1) and said second female body (2) are two portions of a second half mould (6) of said mould, said forming cavity being defined between said half moulds (5; 6).

9. System according to any preceding claim, wherein said inner and outer surfaces are slidable in relation to one another at least partially in a circumferal direction.

10. System according to any preceding claim, wherein said male body (1) comprises at least one portion of a piston (10) of a piston pump (11) for plastics and said female body (2) comprises at least one portion of a cylinder (12) of said piston pump (11).

11. Apparatus for processing plastics in melted or pasty state, said apparatus comprising a seal system according to any preceding claim.

12. Apparatus according to claim 11, comprising an extruder for dispensing plastics.

13. Apparatus according to claim 11, comprising a mould for compression moulding of doses (D) of plastics.

14. Apparatus according to claim 11, comprising a piston pump (11) for plastics.

## Patentansprüche

1. Dichtungssystem mit:
- wenigstens einem Steckerkörper (1), der eine Außenfläche aufweist;
- wenigstens einem Kupplungskörper (2), der eine Innenfläche aufweist, die mit der Außenfläche gekoppelt ist, wobei die Innenfläche und die Außenfläche zylindrische Flächen sind, die koaxial zueinander sind, wobei die Innenfläche und die Außenfläche in Bezug aufeinander wenigstens teilweise in einer axialen Richtung verschiebbar sind, wobei ein Zwischenraum zwischen der Innenfläche und der Außenfläche besteht;
- wenigstens einer Kammer (3), die ausgebildet ist, um Kunststoff zu enthalten, wobei die Kammer (3) wenigstens teilweise durch den Steckerkörper (1) und/oder durch den Kupplungskörper (2) definiert ist, wobei die Kammer (3) mit dem Zwischenraum in wenigstens einer Arbeitskonfiguration der Körper (1; 2) kommuniziert;
**dadurch gekennzeichnet, dass** durch den Zwischenraum Kunststoff austreten kann, der in der Kammer enthalten ist, dass das Dichtungssystem wenigstens einen Dichtungsring (4) aufweist, der in dem Zwischenraum angeordnet ist, um ein Austreten des Kunststoffs zu vermeiden, und dass der Dichtungsring (4) ein offener elastischer Ring ist.

2. System nach Anspruch 1, bei dem der offene elastische Ring zwei Seitenflächen aufweist, die eben und parallel zueinander sind.

3. System nach Anspruch 1 oder 2, bei dem der Dichtungsring (4) in einem Sitz aufgenommen ist, der an dem Steckerkörper (1) oder an dem Kupplungskörper (2) vorgesehen ist.

4. System nach irgendeinem vorhergehenden Anspruch, bei dem der Dichtungsring (4) aus Stahl besteht, insbesondere aus Edelstahl und/oder aus gehärtetem Stahl, und/oder aus Kunststoff, der einen Widerstand gegenüber Druck und Temperatur hat, der größer als derjenige des in der Kammer (3) aufgenommenen Kunststoffes ist.

5. System nach irgendeinem vorhergehenden Anspruch, bei dem die Kammer (3) einen Extrusionskanal (7) aufweist, wobei die Kammer (3) einen Extrusionsauslass (8) aufweist, wobei der Kupplungskörper (2) ein Scherelement aufweist, wobei der Kupplungskörper (2) mit reziproker Bewegung zwischen wenigstens einer ersten Position, in der das Scherelement den Auslass (8) schließt, mit einer abgetrennten Dosis von Kunststoff, der aus dem Auslass austritt, und einer zweiten Position bewegbar ist, in der das Scherelement den Auslass (8) offen lässt, um es zu ermöglichen, dass Kunststoff daraus ausfließt.

6. System nach irgendeinem vorhergehenden Anspruch, bei dem der Steckerkörper (1) und der Kupplungskörper (2) zwei Teile einer ersten Halbform (5) einer Druckform zum Komprimieren von Kunststoff sind, und wobei die Kammer (3) einen Formhohlraum der Form aufweist.

7. System nach irgendeinem vorhergehenden Anspruch, das Folgendes aufweist:
- wenigstens einen zweiten Steckerkörper (1), der eine zweite Außenfläche aufweist;
- wenigstens einen zweiten Kupplungskörper (2), der eine zweite Innenfläche aufweist, die mit der zweiten Außenfläche gekoppelt ist, wobei die zweite Innenfläche und die zweite Außenfläche in Bezug aufeinander wenigstens teilweise in einer axialen Richtung verschiebbar sind, wobei ein zweiter Zwischenraum zwischen der zweiten Innenfläche und der zweiten Außenfläche gebildet ist, wobei die Kammer (3) wenigstens teilweise von dem zweiten Steckerkörper (1) und/oder von dem zweiten Kupplungskörper (2) umschlossen ist, wobei die Kammer (3) mit dem zweiten Zwischenraum in wenigstens einer Arbeitskonfiguration des zweiten Steckerkörpers und des zweiten Kupplungskörpers (1; 2) in Verbindung ist;
- wenigstens einen zweiten Dichtungsring (4), der in dem zweiten Zwischenraum angeordnet ist, um eine Leckage des Kunststoffes zu verhindern.

8. System nach Anspruch 7 und 6, bei dem der zweite Steckerkörper (1) und der zweite Kupplungskörper (2) zwei Teile einer zweiten Halbform (6) der Form sind, wobei der Formhohlraum zwischen den beiden Halbformen (5; 6) definiert ist.

9. System nach irgendeinem vorhergehenden Anspruch, bei dem die Innenfläche und die Außenfläche in Bezug aufeinander wenigstens teilweise in einer Umfangsrichtung verschiebbar sind.

10. System nach irgendeinem vorhergehenden Anspruch, bei dem der Steckerkörper (1) wenigstens einen Teil eines Kolbens (10) einer Kolbenpumpe (11) für Kunststoff aufweist, und der Kupplungskörper (2) wenigstens einen Teil eines Zylinders (12) der Kolbenpumpe (11).

11. Vorrichtung zum Verarbeiten von Kunststoff in geschmolzenem oder pastösem Zustand, wobei die Vorrichtung ein Dichtungssystem nach irgendeinem vorhergehenden Anspruch aufweist.

12. Vorrichtung nach Anspruch 11, umfassend einen Extruder zum Ausgeben von Kunststoff.

13. Vorrichtung nach Anspruch 11, umfassend eine Form zum Druckgießen von Dosen (D) von Kunststoff.

14. Vorrichtung nach Anspruch 11, umfassend eine Kolbenpumpe (11) für Kunststoff.

## Revendications

1. Système d'étanchéité comprenant :
- au moins un corps mâle (1) ayant une surface extérieure ;
- au moins un corps femelle (2) ayant une surface intérieure couplée à ladite surface extérieure, ladite surface intérieure et ladite surface extérieure étant des surfaces cylindriques qui sont coaxiales l'une par rapport à l'autre, lesdites surfaces intérieure et extérieure étant aptes à coulisser l'une par rapport à l'autre au moins partiellement dans une direction axiale, un interstice étant compris entre lesdites surfaces intérieure et extérieure ;
- au moins une chambre (3) disposée pour contenir des matières plastiques, ladite chambre (3) étant au moins partiellement définie par ledit corps mâle (1) et/ou par ledit corps femelle (2), ladite chambre (3) communiquant avec ledit interstice dans au moins une configuration opérationnelle desdits corps (1 ; 2) ;
**caractérisé en ce qu'**à travers ledit interstice peuvent fuir des matières plastiques qui sont contenues dans ladite chambre, **en ce que** ledit système d'étanchéité comprend au moins une bague d'étanchéité (4) disposée dans ledit interstice pour empêcher la fuite desdites matières plastiques, et **en ce que** ladite bague d'étanchéité (4) est une bague élastique ouverte.

2. Système selon la revendication 1, dans lequel ladite bague élastique ouverte a deux surfaces latérales qui sont plates et parallèles l'une à l'autre.

3. Système selon la revendication 1 ou 2, dans lequel ladite bague d'étanchéité (4) est logée dans un logement qui est obtenu sur ledit corps mâle (1) ou sur ledit corps femelle (2).

4. Système selon l'une quelconque des revendications précédentes, dans lequel ladite bague d'étanchéité (4) est faite d'acier, en particulier d'acier inoxydable et/ou trempé, et/ou de matières plastiques ayant une résistance à la pression et à la température qui est plus grand que les matières plastiques contenues dans ladite chambre (3).

5. Système selon l'une quelconque des revendications précédentes, dans lequel ladite chambre (3) comprend un conduit d'extrusion (7), ladite chambre (3) ayant une sortie d'extrusion (8), ledit corps femelle (2) comprenant un élément de cisaillement, ledit corps femelle (2) étant mobile avec un mouvement réciproque entre au moins une première position dans laquelle ledit élément de cisaillement ferme la sortie (8) ayant séparé une dose desdites matières plastiques écoulées de ladite sortie, et une deuxième position dans laquelle ledit élément de cisaillement laisse ladite sortie (8) ouverte pour permettre auxdites matières plastique de s'écouler.

6. Système selon l'une quelconque des revendications précédentes, dans lequel ledit corps mâle (1) et ledit corps femelle (2) sont deux parties d'un premier demi-moule (5) d'un moule de compression pour comprimer des matières plastiques et dans lequel ladite chambre (3) comprend une cavité de formage dudit moule.

7. Système selon l'une quelconque des revendications précédentes, comprenant :
- au moins un deuxième corps mâle (1) ayant une deuxième surface extérieure ;
- au moins un deuxième corps femelle (2) ayant une deuxième surface intérieure couplée à ladite deuxième surface extérieure, lesdites deuxièmes surfaces intérieure et extérieure étant aptes à coulisser l'une par rapport à l'autre au moins partiellement dans une direction axiale, un deuxième interstice étant compris entre lesdites deuxièmes surfaces intérieure et extérieure, ladite chambre (3) étant au moins partiellement limitée par ledit deuxième corps mâle (1) et/ou par ledit deuxième corps femelle (2), ladite chambre (3) communiquant avec ledit deuxième interstice dans au moins une configuration opérationnelle desdits deuxièmes corps mâle et femelle (1 ; 2) ;
- au moins une deuxième bague d'étanchéité (4) disposée dans ledit deuxième interstice pour empêcher une fuite desdites matières plastiques.

8. Système selon l'une quelconque des revendications 7 et 6, dans lequel ledit deuxième corps mâle (1) et ledit deuxième corps femelle (2) sont deux parties d'un deuxième demi-moule (6) dudit moule, ladite cavité de formage étant définie entre lesdits demi-moules (5 ; 6).

9. Système selon l'une quelconque des revendications précédentes, dans lequel lesdites deuxièmes surfaces intérieure et extérieure sont aptes à coulisser l'une par rapport à l'autre au moins partiellement dans une direction circonférentielle.

10. Système selon l'une quelconque des revendications précédentes, dans lequel ledit corps mâle (1) comprend au moins une partie d'un piston (10) d'une pompe à piston (11) pour matières plastiques et ledit corps femelle (2) comprend au moins une partie d'un cylindre (12) de ladite pompe à piston (11).

11. Appareil pour traiter des matières plastiques à l'état fondu ou pâteux, ledit appareil comprenant un système d'étanchéité selon l'une quelconque des revendications précédentes.

12. Appareil selon la revendication 11, comprenant une extrudeuse pour distribuer des matières plastiques.

13. Appareil selon la revendication 11, comprenant un moule pour mouler par compression des doses (D) de matières plastiques.

14. Appareil selon la revendication 11, comprenant une pompe à piston (11) pour matières plastiques.
